# EUROPÄISCHE PATENTANMELDUNG

(11) **EP 0 735 253 A2**
(43) Veröffentlichungstag der Anmeldung: **02.10.1996**
(21) Anmeldenummer: 96810133.7
(22) Anmeldetag: 06.03.1996
(51) Int. Cl.: F02B 37/00

(54) **Verfahren und Vorrichtung zur Registeraufladung einer Brennkraftmaschine**

(30) Priorität: 27.03.1995 DE 19511232
(71) Anmelder: ABB Management AG, CH-5401 Baden (CH)
(72) Erfinder: Baets, Jozef, 5400 Baden (CH); Fussstetter, Klaus, 5408 Ennetbaden (CH)

(57) **Zusammenfassung**

Aufgabe der Erfindung ist es, ein solches Verfahren zu schaffen, welches ein stetiges Betriebsverhalten des Gesamtsystems Brennkraftmaschine-Turbolader und eine ständige Anpassung der Turbolader an den Betriebszustand der Brennkraftmaschine gewährleistet. Ausserdem sollen Vorrichtungen zum Betreiben des Verfahrens aufgezeigt werden.

Erfindungsgemäss wird dies dadurch erreicht, dass bei kleineren Laständerungen der Brennkraftmaschine (2) zunächst der Turbinenquerschnitt zumindest des ersten Abgasturboladers (3) entsprechend vergrössert bzw. verringert wird. Erst bei Erreichen eines bestimmten Schaltpunktes, ab dem die Laständerungen nicht mehr durch Anpassung der oder des Turbinenquerschnitte/s kompensiert werden können, erfolgt das Zu- bzw. Abschalten eines Abgasturboladers (4 bzw. 29, 34). Gleichzeitig wird zumindest der Turbinenquerschnitt des ersten Abgasturboladers (3) entsprechend verringert bzw. beim Abschalten entsprechend vergrössert. Nachfolgende Laständerungen werden durch eine Anpassung des Turbinenquerschnittes zumindest des ersten Abgasturboladers (3) ausgeglichen.
Dazu ist der erste Abgasturbolader (3) als Verstellturbolader und der bzw. die weiteren Abgasturbolader sind entweder als Verstell- (29) oder als Festturbolader (4, 34) ausgebildet.

## Beschreibung

### Technisches Gebiet

Die Erfindung betrifft ein Verfahren und eine Vorrichtung zur Registeraufladung von Brennkraftmaschinen mit zumindest zwei Abgasturboladern.

### Stand der Technik

Eine von einem Abgasturbolader aufgeladene Brennkraftmaschine soll häufig bereits bei niedrigen Drehzahlen ein hohes Drehmoment, d.h. einen entsprechenden Ladedruck erreichen. Es hat sich jedoch gezeigt, dass gerade bei höherer Aufladung mittels eines Abgasturboladers ein ungünstiges Betriebsverhalten der Brennkraftmaschine auftritt.

Zur Verbesserung des Betriebs- und Drehmomentverhaltens von Brennkraftmaschinen sind verschiedene Massnahmen bekannt. Dazu gehören unter anderem:
- Umschalten der Auspuffgase der Brennkraftmaschine auf zwei oder mehrere Abgasturbolader, die sogenannte Registeraufladung (s. DE-C2 25 37 863);
- Regeleingriffe am Abgasturbolader, z.B. durch Verstellen der Leitschaufeln des Leitgitters der Abgasturbine (s. DE-A1 43 09 637).

Bei der konventionellen Registeraufladung arbeiten zumindest zwei parallel zueinander angeordnete Abgasturbolader mit der Brennkraftmaschine zusammen. Dadurch werden auch bei niedriger Drehzahl der Brennkraftmaschine hohe Drehmomente erreicht. Zur Registeraufladung werden sogenannte Festturbolader eingesetzt, die jeweils eine bezüglich ihrer Geometrie starre, d.h. nicht verstellbare Turbine besitzen.

Arbeitet die Brennkraftmaschine im unteren Lastbereich, ist nur ein Abgasturbolader wirksam mit ihr verbunden. Je nach Last werden ein oder mehrere Abgasturbolader parallel hinzugeschaltet. Zur Veränderung des Teillast-, des Beschleunigungsverhaltens oder der Drehmomentencharakteristik der Brennkraftmaschine kann jeder der zunächst zugeschalteten Abgasturbolader auch wieder abgeschaltet werden. Dies wird mittels in der Ladeluft- und der Abgasleitung angeordneten Absperrorganen realisiert.
Aufgrund dieser Schaltvorgänge ergeben sich jedoch relativ grosse Sprünge im Ladedruck. Die vom Ladedruck abhängigen Betriebsparameter, wie z.B. die Leistung, das Luftverhältnis, der Brennstoffverbrauch und die thermische Belastung der Brennkraftmaschine bzw. des Turboladers, verändern sich daher ebenfalls sprunghaft, was zu einem unstetigen Betriebsverhalten des Gesamtsystems Brennkraftmaschine-Turbolader führt.

Zur besseren Anpassung an den aktuellen Betriebszustand einer Brennkraftmaschine werden z.B. Abgasturbolader mit variabler Turbinengeometrie verwendet. Im Gegensatz zu den bereits o.g. Festturboladern werden sie als Verstellturbolader bezeichnet. Der erforderliche Querschnitt der Abgasturbine wird bei solchen Abgasturboladern durch Verstellen der Leitschaufeln ihres Leitgitters erreicht. Mit ihrer variablen Turbinenfläche können sie laufend an die Brennkraftmaschine angepasst werden, weshalb sowohl deren Betriebszustand als auch der Ladedruck stets optimal sind. Ein wesentlicher Nachteil der Verstellturbolader besteht jedoch darin, dass der mit der Turbine verbundene Verdichter bei Schwankungen des Volumenstromes oder des Ladedruckes zum Pumpen neigt, da er relativ nahe der Pumpgrenze betrieben wird. In dieser Situation wird die Brennkraftmaschine nicht mehr aufgeladen, d.h. die benötigte Leistung kann nicht erbracht werden.

### Darstellung der Erfindung

Die Erfindung versucht, all diese Nachteile zu vermeiden. Ihr liegt die Aufgabe zugrunde, ein Verfahren zur Registeraufladung von Brennkraftmaschinen zu schaffen, welches sowohl ein stetiges Betriebsverhalten des Gesamtsystems Brennkraftmaschine-Turbolader als auch eine ständige Anpassung der Turbolader an den optimalen Betriebszustand der Brennkraftmaschine gewährleistet. Ausserdem sollen Vorrichtungen zum Betreiben des Verfahrens aufgezeigt werden.

Erfindungsgemäss wird dies dadurch erreicht, dass bei einem Verfahren gemäss dem Oberbegriff des Anspruchs 1, bei kleineren Laständerungen der Brennkraftmaschine zunächst der Turbinenquerschnitt zumindest des ersten Abgasturboladers entsprechend vergrössert bzw. verringert wird. Erst bei Erreichen eines bestimmten Schaltpunktes, ab dem die Laständerungen nicht mehr durch Anpassung der oder des Turbinenquerschnitte/s kompensiert werden können, erfolgt das Zu- bzw. Abschalten eines der weiteren Abgasturbolader. Gleichzeitig mit dem Zuschalten wird zumindest der Turbinenquerschnitt des ersten Abgasturboladers entsprechend verringert bzw. beim Abschalten entsprechend vergrössert. Nachfolgende Laständerungen werden erneut durch eine entsprechende Anpassung des Turbinenquerschnittes zumindest des ersten Abgasturboladers ausgeglichen.

Dazu wird als erster Abgasturbolader ein Verstellturbolader verwendet, welcher ständig mit der Brennkraftmaschine wirkverbunden ist. Der bzw. die weiteren Abgasturbolader sind entweder als Verstell- oder als Festturbolader ausgebildet. In der Abgasturbine jedes Verstellturboladers ist ein an sich bekanntes Leitgitter mit verstellbaren Leitschaufeln angeordnet.

Durch die erfindungsgemässe Verwendung zumindest eines Verstellturboladers in einer Vorrichtung zur Registeraufladung, werden die Vorteile dieser bisher separat angewendeten Massnahmen zur Verbesserung des Drehmomentverhaltens von Brennkraftmaschinen miteinander verknüpft. Weil der ständig mit der Brennkraftmaschine wirkverbundene erste Abgasturbolader als Verstellturbolader ausgebildet ist, lassen sich kleinere Laständerungen problemlos ausgleichen.
Indem der Turbinenquerschnitt zumindest des ersten Verstellturboladers gleichzeitig mit dem Ab- bzw. Zuschalten eines der oder des weiteren Abgasturbolader/s entsprechend angepasst wird, erfährt der Gesamtquerschnitt der Abgasturbinen auch am Schaltpunkt eine relativ kontinuierliche Veränderung. Auf diese Weise werden grosse Sprünge im Ladedruck vermieden und das Betriebsverhalten des Gesamtsystems Brennkraftmaschine-Turbolader wird wesentlich stetiger.

In einer vorteilhaften Ausführungsform der Erfindung sind zwei Abgasturbolader mit der Brennkraftmaschine verbunden, wobei der zweite sowohl ein Festturbolader als auch ein weiterer Verstellturbolader sein kann. In der Ladeluftleitung des zweiten Abgasturboladers ist eine Rückschlagklappe und in seiner Abgasleitung ein Steuerventil angeordnet. Hierzu werden vorzugsweise Abgasturbolader unterschiedlicher Baugrösse verwendet, weil sich dadurch eine grössere Bandbreite von Verstellmöglichkeiten für die resultierende Gesamtturbinenfläche des Aufladesystems ergibt.

In einer nächsten Ausführungsform der Erfindung wird als zweiter Abgasturbolader ebenfalls ein Verstellturbolader verwendet. Dieser zweite Verstellturbolader besitzt eine Rückschlagklappe für die Ladeluft, welche in der Ladeluftleitung angeordnet ist. Die verstellbaren Leitschaufeln des Leitgitters seiner Abgasturbine sind vollständig verschliessbar ausgebildet, was dadurch erreicht wird, dass sie einander überlappen. Beim Abschalten des zweiten Verstellturboladers werden die Leitschaufeln geschlossen und erst bei seinem erneuten Zuschalten wieder geöffnet.
Als zusätzlicher Vorteil kann so die Abgasturbine des zweiten Verstellturboladers intern zu- bzw. abgeschaltet werden, d.h. ein separates Steuerventil in der Abgasleitung wird nicht mehr benötigt.

Es ist vorteilhaft, wenn zwischen dem Austritt des Verdichters und dem Eintritt der Turbine beider Verstellturbolader jeweils eine Bypassleitung mit einem integrierten Steuerventil angeordnet ist. Damit kann ein bestimmter Teil der Ladeluft vor der Brennkraftmaschine abgezweigt und in die Abgasturbinen der Abgasturbolader eingeleitet werden. Demzufolge werden diese mit einem grösseren Massenstrom beaufschlagt, was wiederum die Fördermenge der Verdichter und damit auch die Aufladung der Brennkraftmaschine gewährleistet.

In einer weiteren Ausführungsform der Erfindung sind mehr als zwei Abgasturbolader mit der Brennkraftmaschine verbunden. Dazu sind neben dem ersten zumindest ein zweiter Verstellturbolader und ein Festturbolader angeordnet. In der Ladeluftleitung jedes Festturboladers ist eine Rückschlagklappe und in seiner Abgasleitung ein Steuerventil angeordnet. Bei Verwendung von mehreren Abgasturboladern sind am Schaltpunkt von vornherein kleinere Sprünge des Ladedruckes zu erwarten, als das bei nur zwei Abgasturboladern der Fall ist. Ausserdem ist die Bandbreite der Verstellmöglichkeiten für die resultierende Gesamtturbinenfläche des Aufladesystems wesentlich grösser, so dass vorzugsweise kleinere Abgasturbolader gleicher Baugrösse eingesetzt werden. Das erlaubt auch bei dieser Ausführungsform der Erfindung die Verwendung standardisierter Abgasturbolader und senkt somit die Kosten.

Ferner ist es auch bei dieser Lösung vorteilhaft, wenn zumindest in der Abgasturbine des zweiten Verstellturboladers ein Leitgitter mit vollständig verschliessbaren Leitschaufeln ausgebildet und in der Ladeluftleitung jeder vollständig verschliessbaren Abgasturbine eine Rückschlagklappe angeordnet ist. Dazu sind die Leitschaufeln dieser Abgasturbinen einander überlappend ausgebildet.

### Kurze Beschreibung der Zeichnung

In der Zeichnung sind mehrere Ausführungsbeispiele der Erfindung anhand einer Brennkraftmaschine mit zwei oder mehreren einstufigen Abgasturboladern in Registeranordnung dargestellt. Es zeigen:
- Fig. 1: eine schematische Darstellung der Brennkraftmaschine mit zwei Abgasturboladern, von denen einer als Verstellturbolader und der andere entweder als Fest- oder als Verstellturbolader ausgebildet ist;
- Fig. 2: einen Teillängsschnitt durch die Abgasturbine eines Verstellturboladers;
- Fig. 3: eine Darstellung entsprechend Fig. 1, jedoch mit zwei Verstellturboladern;
- Fig. 4: eine Abwicklung des Leitgitters des zweiten Verstellturboladers in vollständig geschlossenem Zustand, vergrössert dargestellt;
- Fig. 5: eine schematische Darstellung der Brennkraftmaschine mit drei Abgasturboladern, von denen zwei als Verstellturbolader und der dritte als Festturbolader ausgebildet sind;
- Fig. 6: eine Darstellung entsprechend Fig. 5, jedoch in einer anderen Ausführungsform.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

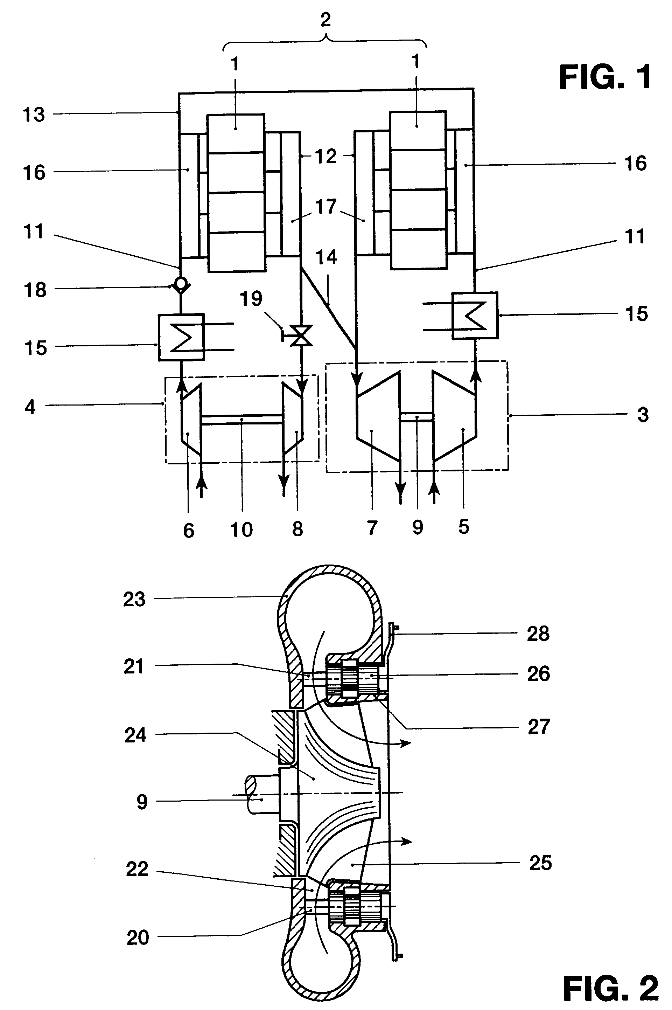

Eine als Dieselmotor mit zwei V-förmigen Zylinderbänken 1 ausgebildete Brennkraftmaschine 2 ist mit zwei parallel zueinander angeordneten Abgasturboladern 3, 4 verbunden, wobei jeder Zylinderbank 1 einer der Abgasturbolader 3, 4 zugeordnet ist. Der erste Abgasturbolader 3 ist als Verstellturbolader und der zweite Abgasturbolader 4 als Festturbolader ausgebildet. Beide Abgasturbolader 3, 4 bestehen aus jeweils einem Verdichter 5, 6 und einer Abgasturbine 7, 8, die auf einer gemeinsamen Welle 9, 10 angeordnet sind. Sowohl der Verstellturbolader 3 als auch der Festturbolader 4 ist über jeweils eine Ladeluftleitung 11 und eine Abgasleitung 12 mit jeweils einer der Zylinderbänke 1 verbunden. Die Ladeluftleitungen 11 besitzen eine gemeinsame Verbindungsleitung 13 und die Abgasleitungen 12 eine Verbindungsleitung 14. In den Ladeluftleitungen 11 ist jeweils ein Ladeluftkühler 15 angeordnet. Zwischen den Ladeluftleitungen 11 sowie den Zylinderbänken 1 ist jeweils ein Ladeluftsammelbehälter 16 und zwischen den Abgasleitungen 12 und den Zylinderbänken 1 ein Abgassammelbehälter 17 ausgebildet. Der Festturbolader 4 besitzt zwei Absperrorgane 18, 19. Sie sind in seiner Ladeluftleitung 11 bzw. in der Abgasleitung 12 angeordnet und als Rückschlagklappe bzw. Steuerventil ausgebildet (Fig. 1).

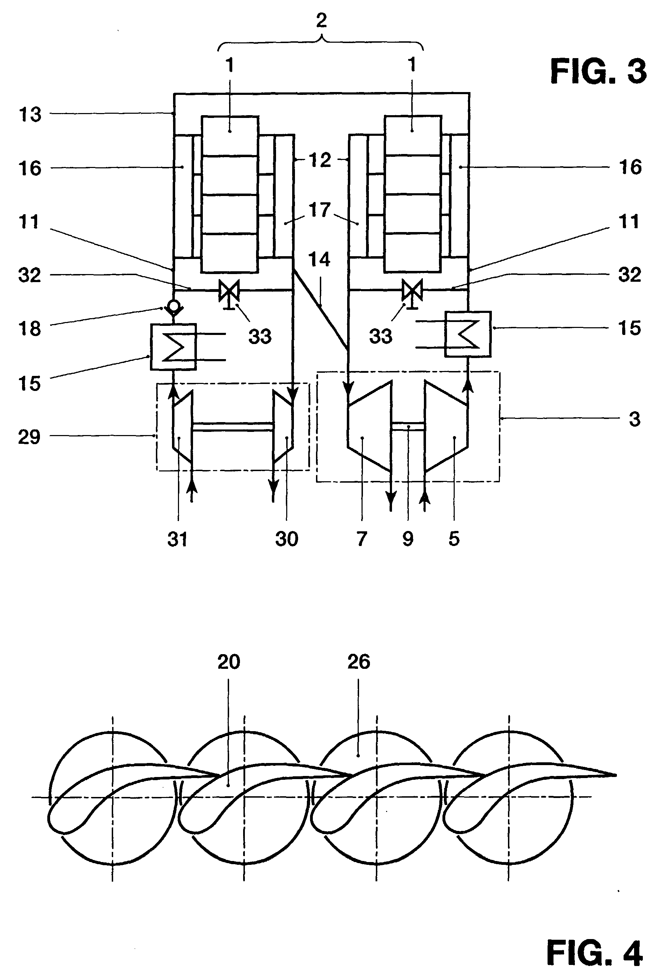

Die Abgasturbine 7 des Verstellturboladers 3 ist mit einem variablen Turbinenquerschnitt in Form von verstellbaren Leitschaufeln 20 eines Leitgitters 21 versehen (Fig. 2). Das Leitgitter 21 ist in einem Strömungskanal 22 angeordnet, welcher vom Gehäuse 23 der Abgasturbine 7 und der Nabe 24 ihrer Laufschaufeln 25 begrenzt wird. Jede Leitschaufel 20 ist mit einer Verstellwelle 26 verbunden, die in einer das Gehäuse 23 durchdringenden Bohrung 27 gelagert ist. An ihren aus den Bohrungen 27 herausragenden Enden sind die Verstellwellen 26 mit jeweils einem Schwenkhebel 28 versehen. Die Winkelverstellung der Schwenkhebel 28 erfolgt durch nicht dargestellte Betätigungsmittel, wie sie beispielsweise aus dem Verdichterbau bekannt sind.

Der Verstellturbolader 3 ist grösser als der Festturbolader 4 ausgebildet. Damit ergibt sich eine grössere Bandbreite von Verstellmöglichkeiten für die resultierende Turbinenfläche der gesamten Vorrichtung, d.h. die Abgasturbolader 3, 4 können besser an den Dieselmotor 2 angepasst werden.

Bei Vollast des Dieselmotors 2 arbeiten der Festturbolader 4 mit konstantem Querschnitt seiner Abgasturbine 8 und der Verstellturbolader 3 mit mittlerem oder maximal geöffnetem Querschnitt seiner Abgasturbine 7. Die von den Zylinderbänken 1 des Dieselmotors 2 kommenden Abgase strömen zunächst in die Abgassammelbehälter 17 und von dort aus über die Abgasleitungen 12 in die Abgasturbinen 7, 8. Die von letzteren angetriebenen Verdichter 5, 6 fördern die atmosphärisch angesaugte und komprimierte Luft über die Ladeluftleitungen 11 in jeweils einen Ladeluftsammelbehälter 16, aus denen die Ladeluft in die Zylinderbänke 1 gelangt. Um die erforderliche Ladelufttemperatur zu erzielen wird die von den Verdichtern 5, 6 angesaugte Luft durch die Ladeluftkühler 15 geleitet.

Wird der Dieselmotor 2 mit einer geringeren Last gefahren, erfolgt eine Reduzierung des Ersatzquerschnittes der Abgasturbine 7 des Verstellturboladers 3. Dies geschieht durch entsprechendes Verstellen der Leitschaufeln 20, welche über ihre Verstellwellen 26 und die damit verbundenen Schwenkhebel 28 betätigt werden.

Bei Erreichen eines bestimmten Schaltpunktes, ab dem die verringerte Last nicht mehr durch Anpassung des Querschnittes der Abgasturbine 7 des Verstellturboladers 3 kompensiert werden kann, erfolgt das Abschalten des Festturboladers 4 durch Schliessen der Rückschlagklappe 18 und des Steuerventils 19. Gleichzeitig wird der Querschnitt der Abgasturbine 7 des Verstellturboladers 3 vergrössert, so dass grosse Sprünge im Ladedruck vermieden werden. Die restlichen Abgase der abgeschalteten Zylinderbank 1 gelangen nunmehr über die Verbindungsleitung 14 zur Abgasturbine 7 des Verstellturboladers 3. Nachfolgende Laständerungen werden erneut durch eine entsprechende Anpassung des Querschnittes der Abgasturbine 7 des Verstellturboladers 3 ausgeglichen. Erst bei Erreichen des Schaltpunktes wird der Festturbolader 4 wieder zugeschaltet.

Anstatt des Festturboladers 4 kann auch ein zweiter Verstellturbolader mit dem Dieselmotor 2 verbunden sein (nicht dargestellt). Die weitere Ausbildung der Vorrichtung erfolgt analog dem oben dargestellten Ausführungsbeispiel. Beide Verfahren verlaufen im wesentlichen gleich. Unterschiedlich zum ersten Verfahren ist nur, dass der Querschnitt der verstellbaren zweiten Abgasturbine bei Vollast des Dieselmotors 2 maximal geöffnet wird. Nachfolgende Laständerungen werden dann mittels entsprechender Verstellung beider Abgasturbinen ausgeglichen. Das führt vorteilhaft zu einem grösseren Verstellbereich vor Erreichen des Schaltpunktes, bei dem der zweite Verstellturbolader abgestellt wird.

In einem zweiten Ausführungsbeispiel ist neben dem ersten Verstellturbolader 3 ein zweiter, parallel zum ersten angeordneter Verstellturbolader 29 mit dem Dieselmotor 2 verbunden. In der Ladeluftleitung 11 des zweiten Verstellturboladers 29 ist ebenfalls eine Rückschlagklappe 18 angeordnet (Fig. 3). Die verstellbaren Leitschaufeln 20 seiner Abgasturbine 30 sind einander überlappend ausgebildet (Fig. 4). Zwischen dem Austritt des Verdichters 5, 31 und dem Eintritt der Abgasturbine 7, 30 der beiden Verstellturbolader 3, 29 ist jeweils eine Bypassleitung 32 mit einem integrierten Steuerventil 33 angeordnet.

Bei Vollast des Dieselmotors 2 arbeiten der zweite Verstellturbolader 29 mit maximalem und der erste Verstellturbolader 3 mit mittlerem oder maximal geöffnetem Querschnitt ihrer Abgasturbinen 30, 7. Wird der Dieselmotor 2 mit einer geringeren Last gefahren, erfolgt eine gleichzeitige Reduzierung der Ersatzquerschnitte beider Abgasturbinen 30, 7. Entsprechend Bedarf werden die Bypassleitungen 32 geöffnet, um damit zusätzliche Verdichterluft in die Abgasturbinen 30, 7 einzuleiten. Dadurch wird mehr Luft zur Aufladung des Dieselmotors 2 angesaugt und so dem Pumpen der Verdichter 31, 5 entgegengewirkt.

Bei Unterschreiten einer bestimmten Motorlast wird der Verdichter 31 des zweiten Verstellturboladers 29 mit der Rückschlagklappe 18 abgeschaltet. Das Abschalten seiner Abgasturbine 30 erfolgt durch vollständiges Schliessen der Leitschaufeln 20, welche dabei einander überlappen. Danach erhält die Abgasturbine 7 des ersten Verstellturboladers 3 die gesamte Abgasmenge. Der weitere Verfahrensablauf erfolgt analog dem im bereits oben beschriebenen Ausführungsbeispiel.

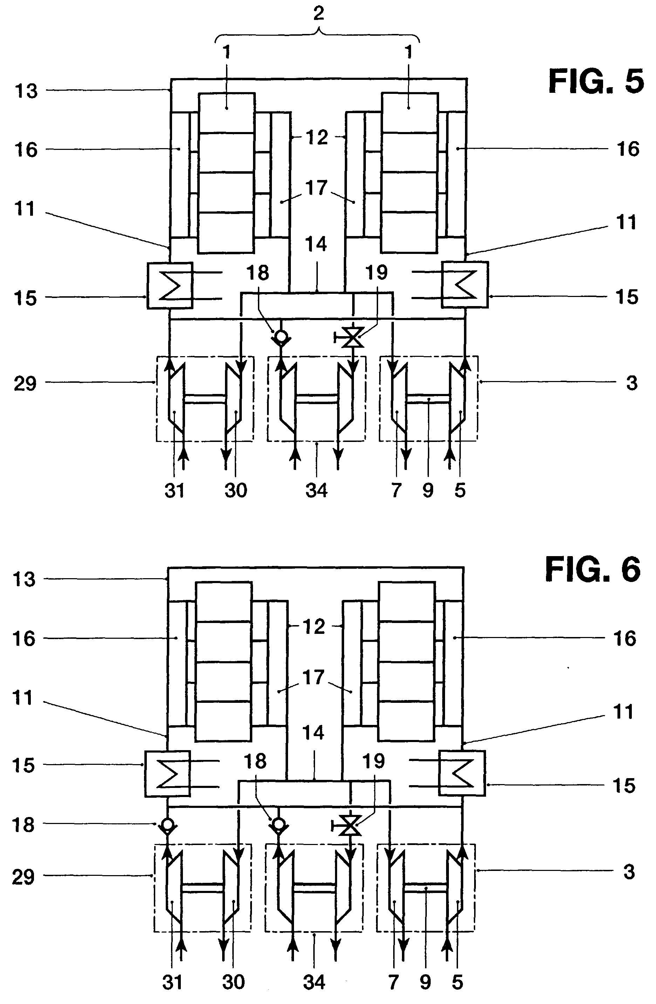

In einem dritten Ausführungsbeispiel sind drei parallel zueinander angeordnete Abgasturbolader mit dem Dieselmotor 2 verbunden. Es handelt sich dabei um zwei Verstellturbolader 3, 29 und einen Festturbolader 34. Der Festturbolader 34 ist zwischen den beiden Verstellturboladern 3, 29 angeordnet und besitzt zwei Absperrorgane 18, 19, die wiederum als Rückschlagklappe bzw. Steuerventil ausgebildet sind (Fig. 5). Die Abgasturbinen 7, 30 der Verstellturbolader 3, 29 sind mit verstellbaren Leitschaufeln 20 ausgestattet.

Bei Vollast des Dieselmotors 2 sind sowohl die Verstellturbolader 3, 29 als auch der Festturbolader 34 mit diesem wirkverbunden. Wird der Dieselmotor 2 mit einer geringeren Last gefahren, erfolgt zunächst eine Reduzierung der Ersatzquerschnitte der Abgasturbinen 7, 30. Dies geschieht durch entsprechendes Verstellen der Leitschaufeln 20. Nach Erreichen des Schaltpunktes wird der Festturbolader 34 durch Schliessen der Rückschlagklappe 18 und des Steuerventils 19 abgeschaltet. Gleichzeitig wird der Querschnitt der Abgasturbinen 7, 30 wieder vergrössert, so dass grosse Sprünge im Ladedruck vermieden werden. Die weitere Anpassung an Laständerungen des Dieselmotors 2 erfolgt erneut durch Verstellen der Turbinenquerschnitte der beiden Verstellturbolader 3, 29. Der abgeschaltete Festturbolader 34 wird erst bei stark ansteigender Last des Dieselmotors 2 wieder zugeschaltet.

In einem nächsten Ausführungsbeispiel sind ebenfalls zwei Verstellturbolader 3, 29 und ein Festturbolader 34 mit dem Dieselmotor 2 verbunden. Jedoch ist die Abgasturbine 30 des zweiten Verstellturboladers 29 mit vollständig verschliessbaren, einander überlappenden Leitschaufeln 20 ausgestattet (Fig. 4) und besitzt ebenso wie der Festturbolader 34 eine Rückschlagklappe 18 (Fig. 6).

Die Anpassung der Abgasturbolader 3, 29, 34 an den Dieselmotor 2 erfolgt im wesentlichen analog dem dritten Ausführungsbeispiel. Zusätzlich wird bei stark verringerter Last mit dem zweiten Verstellturbolader 29 ein weiterer Abgasturbolader abgeschaltet. Dies geschieht durch vollständiges Schliessen der Leitschaufeln 20 und durch Schliessen seiner Rückschlagklappe 18.

### Bezugszeichenliste

- 1: Zylinderbank
- 2: Brennkraftmaschine, Dieselmotor
- 3: Abgasturbolader, erster Verstellturbolader
- 4: Abgasturbolader, Festturbolader
- 5: Verdichter des Verstellturboladers
- 6: Verdichter des Festturboladers
- 7: Abgasturbine des Verstellturboladers
- 8: Abgasturbine des Festturboladers
- 9: Welle des Verstellturboladers
- 10: Welle des Festturboladers
- 11: Ladeluftleitung
- 12: Abgasleitung
- 13: Verbindungsleitung
- 14: Verbindungsleitung
- 15: Ladeluftkühler
- 16: Ladeluftsammelbehälter
- 17: Abgassammelbehälter
- 18: Absperrorgan, Rückschlagklappe
- 19: Absperrorgan, Steuerventil
- 20: Leitschaufel
- 21: Leitgitter
- 22: Strömungskanal
- 23: Gehäuse
- 24: Nabe
- 25: Laufschaufel
- 26: Verstellwelle
- 27: Bohrung
- 28: Schwenkhebel
- 29: Verstellturbolader, zweiter
- 30: Abgasturbine des zweiten Verstellturboladers
- 31: Verdichter des zweiten Verstellturboladers
- 32: Bypassleitung
- 33: Steuerventil
- 34: Festturbolader

## Patentansprüche

1. Verfahren zur Registeraufladung von Brennkraftmaschinen, bei dem zumindest zwei parallel geschaltete Abgasturbolader (3, 4 bzw. 3, 29, 34) mit einer Brennkraftmaschine (2) über Ladeluft- sowie Abgasleitungen (11, 12) zusammenwirken, aber nur der erste Abgasturbolader (3) ständig mit der Brennkraftmaschine (2) in Wirkverbindung steht, während der oder die weiteren Abgasturbolader (4 bzw. 29, 34) je nach Lastzustand der Brennkraftmaschine (2) zu- bzw. abgeschaltet wird/werden, dadurch gekennzeichnet, dass
a) bei kleineren Laständerungen der Brennkraftmaschine (2) zunächst der Turbinenquerschnitt zumindest des ersten Abgasturboladers (3) entsprechend vergrössert bzw. verringert wird,
b) das Zu- bzw. Abschalten des bzw. eines der weiteren Abgasturbolader (4 bzw. 29, 34) erst bei Erreichen eines bestimmten Schaltpunktes erfolgt, ab dem die Laständerungen nicht mehr durch Anpassung der oder des Turbinenquerschnitte/s kompensiert werden können,
c) gleichzeitig mit dem Zu- bzw. Abschalten eines der weiteren Abgasturbolader (4 bzw. 29, 34) zumindest der Turbinenquerschnitt des ersten Abgasturboladers (3) entsprechend verringert bzw. vergrössert wird,
d) nachfolgende Laständerungen erneut durch eine entsprechende Anpassung des Turbinenquerschnittes zumindest des ersten Abgasturboladers (3) ausgeglichen werden.

2. Verfahren nach Anspruch 1, dadurch gekennzeichnet, dass
a) der Turbinenquerschnitt jedes variablen Abgasturboladers (3, 29) durch entsprechendes Öffnen bzw. Schliessen im Leitgitter (21) der Abgasturbine (7, 30) angeordneter Leitschaufeln (20) vergrössert bzw. verringert wird,
b) der Verdichter (31) des in seinem Turbinenquerschnitt variablen Abgasturboladers (29) durch Sperren der Luftzufuhr und die Abgasturbine (30) durch vollständiges Schliessen ihrer Leitschaufeln (20) abgeschaltet werden,
c) beim erneuten Zuschalten des Abgasturboladers (29) die Luftzufuhr zum Verdichter (31) und die Leitschaufeln (20) der Abgasturbine (30) wieder geöffnet werden.

3. Verfahren nach Anspruch 1 oder 2, dadurch gekennzeichnet, dass bei Kombination von zwei mit einem variablen Turbinenquerschnitt ausgebildeten Abgasturboladern (3, 29) ein Teil der Ladeluft vor der Brennkraftmaschine (2) abgezweigt und direkt in die Abgasturbinen (7, 30) der Abgasturbolader (3, 29) eingeleitet wird.

4. Vorrichtung zur Registeraufladung von Brennkraftmaschinen, bestehend aus zumindest zwei an einer Brennkraftmaschine (2) über Ladeluft- sowie Abgasleitungen (11, 12) angeschlossenen und parallel zueinander geschalteten Abgasturboladern (3, 4 bzw. 3, 29, 34), von denen nur der erste ständig mit der Brennkraftmaschine (2) in Wirkverbindung steht, und aus entsprechenden Absperrorganen (18, 19) für die Verdichterluft sowie für die Verbrennungsabgase, dadurch gekennzeichnet, dass als erster Abgasturbolader (3) ein an sich bekannter Verstellturbolader verwendet wird und der bzw. die weiteren Abgasturbolader entweder als Verstell- (29) oder als Festturbolader (4, 34) ausgebildet sind.

5. Vorrichtung nach Anspruch 4, dadurch gekennzeichnet, dass in der Abgasturbine (7, 30) jedes Verstellturboladers (3, 29) ein an sich bekanntes Leitgitter (21) mit verstellbaren Leitschaufeln (20) angeordnet ist.

6. Vorrichtung nach Anspruch 4 oder 5, dadurch gekennzeichnet, dass zwei Abgasturbolader (3, 4) vorzugsweise unterschiedlicher Baugrösse mit der Brennkraftmaschine (2) verbunden sind, wobei in der Ladeluftleitung (11) des zweiten Abgasturboladers (4) eine Rückschlagklappe (18) und in seiner Abgasleitung (12) ein Steuerventil (19) angeordnet ist.

7. Vorrichtung nach Anspruch 5, dadurch gekennzeichnet, dass
a) zwei Abgasturbolader (3, 29) vorzugsweise unterschiedlicher Baugrösse mit der Brennkraftmaschine (2) verbunden sind,
b) der zweite Abgasturbolader (29) ebenfalls als Verstellturbolader ausgebildet ist,
c) das in der Abgasturbine (30) des zweiten Verstellturboladers (29) angeordnete Leitgitter (21) vollständig verschliessbar ausgebildet ist,
d) in der Ladeluftleitung (11) des zweiten Verstellturboladers (29) eine Rückschlagklappe (18) angeordnet ist.

8. Vorrichtung nach Anspruch 7, dadurch gekennzeichnet, dass zwischen dem Austritt des Verdichters (5, 31) und dem Eintritt der Abgasturbine (7, 30) beider Verstellturbolader (3, 29) jeweils eine Bypassleitung (32) mit einem integrierten Steuerventil (33) angeordnet ist.

9. Vorrichtung nach Anspruch 4 oder 5, dadurch gekennzeichnet, dass
a) mehr als zwei Abgasturbolader (3, 29, 34) vorzugsweise gleicher Baugrösse, mit der Brennkraftmaschine (2) verbunden sind,
b) neben dem ersten zumindest ein zweiter Verstellturbolader (29) und ein Festturbolader (34) angeordnet sind,
c) in der Ladeluftleitung (11) des Festturboladers (34) eine Rückschlagklappe (18) und in seiner Abgasleitung (12) ein Steuerventil (19) angeordnet ist.

10. Vorrichtung nach Anspruch 9, dadurch gekennzeichnet, dass zumindest in der Abgasturbine (30) des zweiten Verstellturboladers (29) ein vollständig verschliessbares Leitgitter (21) ausgebildet und in der Ladeluftleitung (11) jeder vollständig verschliessbaren Abgasturbine (30) eine Rückschlagklappe (18) angeordnet ist.

11. Vorrichtung nach Anspruch 7 oder 10, dadurch gekennzeichnet, dass die Leitschaufeln (20) jeder vollständig verschliessbaren Abgasturbine (30) einander überlappend ausgebildet sind.
